Europäisches Patentamt

European Patent Office

Office européen des brevets

(19)

(11) Numéro de publication: **0 021 888**
**B1**

(12) **FASCICULE DE BREVET EUROPEEN**

(45) Date de publication du fascicule du brevet: **12.10.83**

(51) Int. Cl.³: **G 06 F 15/20**

(21) Numéro de dépôt: **80400747.4**

(22) Date de dépôt: **28.05.80**

(54) Moniteur de station de maintenance, et station de maintenance le comportant.

(30) Priorité: **08.06.79 FR 7914721**

(43) Date de publication de la demande:
**07.01.81 Bulletin 81/1**

(45) Mention de la délivrance du brevet:
**12.10.83 Bulletin 83/41**

(84) Etats contractants désignés:
**BE CH DE GB IT LI NL SE**

(56) Documents cités:
US - A - 3 992 092

IEEE TRANSACTIONS ON AEROSPACE AND ELECTRONIC SYSTEMS, vol. AES—13, no. 3, mai 1977
New York, USA
RING: "A distributed intelligence automatic test system for patriot", pages 264—272

IBM TECHNICAL DISCLOSURE BULLETIN, vol. 21, no. 1, juin 1978,
New York, USA
RING et al. "Data processor diagnostic test system", pages 115—117

(73) Titulaire: **THOMSON-CSF**
**173, Boulevard Haussmann**
**F-75379 Paris Cedex 08 (FR)**

(72) Inventeur: **Cerf, Jean**
**"THOMSON-CSF" - SCPI 173, bld Haussmann**
**F-75360 Paris Cedex 08 (FR)**
Inventeur: **Bertrand, Jean-Pierre**
**"THOMSON-CSF" - SCPI 173, bld Haussmann**
**F-75360 Paris Cedex 08 (FR)**

(74) Mandataire: **Benoit, Monique et al,**
**THOMSON-CSF SCPI 173, Bld Haussmann**
**F-75379 Paris Cedex 08 (FR)**

(56) Documents cités
ELEKTRONIK. Bd. 23. Heft 2. 1974, Ing. Otto Limann. pp. 64—66

FELTRON, Microcomputer-Information Gruppe 3.7.1.2/Hewlett-Packard 15.5.1978.

FELTRON, Microcomputer-Information Gruppe 3.7.1-6/Texas Instruments 15.1.1978

Courier Press, Leamington Spa, England.

## Moniteur de station de maintenance, et station de maintenance le comportant

La présente invention concerne un moniteur de station de maintenance. Par moniteur de station de maintenance on entend un appareil destiné à assister un technicien affecté à une station d'essai, pour le contrôle des performances et/ou la localisation de défauts dans un sous ensemble électronique, électromécanique et/ou hydraulique.

Tout système ou équipement électronique, électromécanique ou hydraulique pose des problèmes de maintenance, mot recouvrant un assez grand nombre d'opérations qu'il faut effectuer sur un tel système ou équipment, pour en vérifier les performances et le fonctionnement en relevant les organes défectueux ou les points de ces organes où certains défauts se manifestent et éventuellement apporter un remède aux défaillances constatées.

Actuellement, pour résoudre les problèmes de maintenance qui se posent aux systèmes électroniques, électromécaniques, hydrauliques, on dispose de ce que l'on appelle la maintenance directe et la maintenance de type industriel.

La maintenance directe a pour but de permettre à un utilisateur de maintenir le système soutenu en état opérationnel sur le site où il se trouve implanté. Cette maintenance dispose pour ce faire, de moyens d'essai qui lui permettent de diagnostiquer une défaillance d'un système et d'y apporter un remède par un échange standard en général au niveau d'un sous ensemble.

La maintenance de type industriel vient souvent en complément de la maintenance directe; un élément défectueux ayant été isolé sur le site, il est généralement acheminé vers un centre de réparations, que est dans la majorité des cas l'usine où il a été fabriqué, afin d'y être réparé.

Pour diverses raisons cependant, l'utilisateur a de plus en plus tendance à vouloir assurer lui-même cette maintenance et il se voit proposer des solutions adoptées pour la maintenance de type industriel et qui consistent en des bancs automatiques, ou des bancs manuels.

Un banc automatique consiste en un calculateur pilotant une baie d'instrumentation adaptée. Un tel banc offre l'avantage de ne faire appel qu'à un personnel relativement peu qualifié pour son exploitation mais sa maintenance et l'élaboration des programmes ne peuvent être assurés que par des spécialistes. Il présente toutefois l'inconvénient pour un utilisateur d'avoir été conçu pour assurer le contrôle de séries importantes de sous ensembles réputés bons et est de ce fait mal adapté à la recherche de défauts sur des appareils défectueux en provenance des sites.

Un banc automatique relevant de ce type est décrit dans le document "a Distributed Intelligence Automatic test system for Patriot", pages 264—272, publié dans IEEE Transactions on Aerospace and Electronic Systems, Vol AES 13, N° 3, Mai 1977.

Un banc manuel, souvent constitué par des instruments spécifiques, est généralement conçu pour le contrôle d'une fonction particulière et est utilisé par des spécialistes bien au fait du matériel qu'ils ont à contrôler. De plus sa structure, tout comme pour le banc automatique, est adaptée à des cadences élevées.

Un banc relevant de ce type, conçu pour un contrôle particulier est décrit dans le document "Data processor diagnostic test system" publié dans IBM Technical Disclosure Bulletin, Vol 21, N° 1, juin 1978, pages 115 à 117.

Il résulte de ce qui précède qu'un utilisateur, en fait, ne dispose pas actuellement d'un dispositif de maintenance au sens de la définition qui en a été donnée au début de la description, qui soit approprié à son besoin.

L'objet de l'invention est de définir un appareil appelé moniteur de station de maintenance qui est conçu et réalisé pour aider un utilisateur à résoudre, lui-même, les problèmes de maintenance de type industriel, sans être gêné par les avantages attachés aux appareils de maintenance de ce type actuellement utilisés, qui sont en fait des inconvénients pour lui, par suite principalement d'une mauvaise adaptation au traitement d'un petit nombre d'appareils, de la nécessité de faire appel à des spécialistes, de l'élaboration de programmes complexes en langage particulier.

Suivant une première solution (revendication 1) de l'invention, un moniteur de station de maintenance comportant une unité logique de commande pilotant la procédure de maintenance d'un système électronique, électromécanique et/ou hydraulique à partir de données enregistrées sur un support matériel, comprenanat des moyens d'acquisition des données concernant la procédure de maintenance enregistrées sur le support matériel, des moyens de présentation de cette procédure, connectés en sortie de l'unité de commande, des moyens d'intervention d'un opérateur dans le déroulement de la procédure et des moyens d'interface connectant le moniteur avec au moins une baie d'instrumentation est caractérisé en ce que le support introduit dans le dispositif de lecture des moyens d'acquisition est un disque souple dans lequel sont enregistrés en clair le texte d'une procédure de maintenance et sous forme codée des instructions de commande d'une baie d'instrumentation connectée au moniteur et/ou d'appareils programmables d'un système soumis à la maintenance et que la console de visualisation appartenant aux moyens de présentation affiche en clair des instructions concernant le déroulement pas à pas de la procédure de maintenance et que les moyens de présentation

**0 021 888**

comportent en autre un projecteur programmable de microfiches assurant sous le contrôle des instructions portées sur le disque souple la visualisation de vues et/ou de schémas dont les images sont enregistrées sur un support indépendant du support du texte de la procédure et qui se rapportent aux équipements soumis à la procédure de maintenance. Une deuxième solution est caractérisé dans la revendication 3.

Un moniteur de maintenance suivant l'invention présente dans ces conditions un certain nombre d'avantages. Il est tout d'abord capable de piloter une station de maintenance quelconque, électronique, électromécanique ou hydraulique, grâce à l'établissement toujours possible, d'un fichier complet de procédures constituant la mémoire de masse de l'unité logique et l'établissement dans ce cadre en clair sans faire appel à un code quelconque; dans ces conditions le moniteur est capable de s'autocontrôler. Les moyens de présentation permettant entre autre la visualisation de la procédure, fournissent une aide puissante à l'opérateur qui "voit" le test se dérouler sous ses yeux et qui, disposant de moyens d'intervention, peut agir sur le déroulement de la procédure, alors que, suivant l'art antérieur, les tests se font généralement automatiquement, l'intervention de l'opérateur n'intervenant pratiquement jamais, sauf quelquefois lorsque le test est piloté par un ordinateur puissant. De plus, les systèmes objet de la maintenance nécessitant une baie d'instrumentation adaptée, le moniteur comporte des interfaces banalisées capables de se connecter à n'importe quelle baie d'instrumentation.

L'invention est exposée ci-après plus en détail à l'aide de dessins représentant seulement un mode d'exécution. Les figures représentent:

— la figure 1, un bloc diagramme fonctionnel d'un moniteur utilisant l'invention;

— la figure 2, un diagramme schématique détaillé du moniteur;

— et les figures 3 et 4, une vue du moniteur.

Le moniteur de station de maintenance objet de la présente invention se présente sous la forme d'un appareil relativement simple, pouvant être portable, capable de piloter, de façon semiautomatique, des stations de maintenance à la disposition d'un utilisateur qui peut intervenir, si besoin est, dans le déroulement de la procédure, et dont l'intervention est facilitée par la présentation visuelle de la procédure de maintenance.

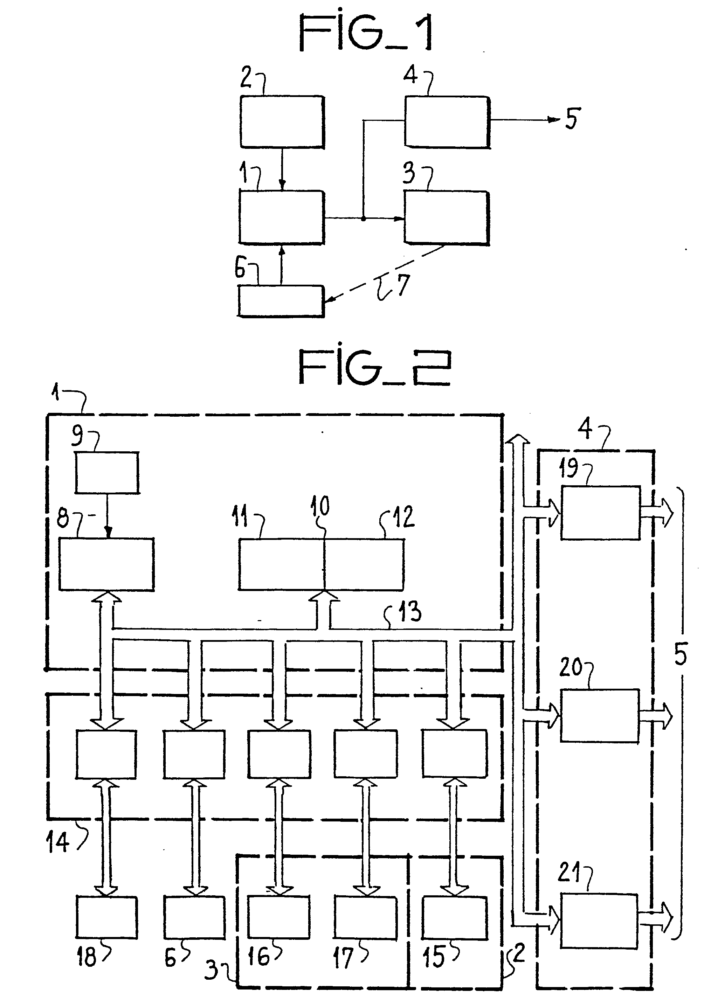

La figure 1 représente le bloc diagramme fonctionnel d'un moniteur de station de maintenance suivant l'invention. Il comprend une unité logique de commande 1, sous la forme d'un micro-ordinateur ou d'un microprocesseur, connecté à un dispositif 2 d'acquisition de données, ou mémoire de masse, des moyens de présentation 3, connectés en sortie de l'unité logique 1 et des moyens d'interface 4, permettant la connexion de l'unité logique à une ou plusieurs baies d'instrumentation 5, ellesmêmes connectées aux systèmes objets de la procédure de maintenance. En 6 on a représenté les moyens à la disposition d'un opérateur, en général un pupitre de commande connecté à l'unité logique 1. La liaison 7 en traits interrompus entre les moyens de présentation 3 et le pupitre 6, indique l'intervention possible et souvent demandée de l'opérateur.

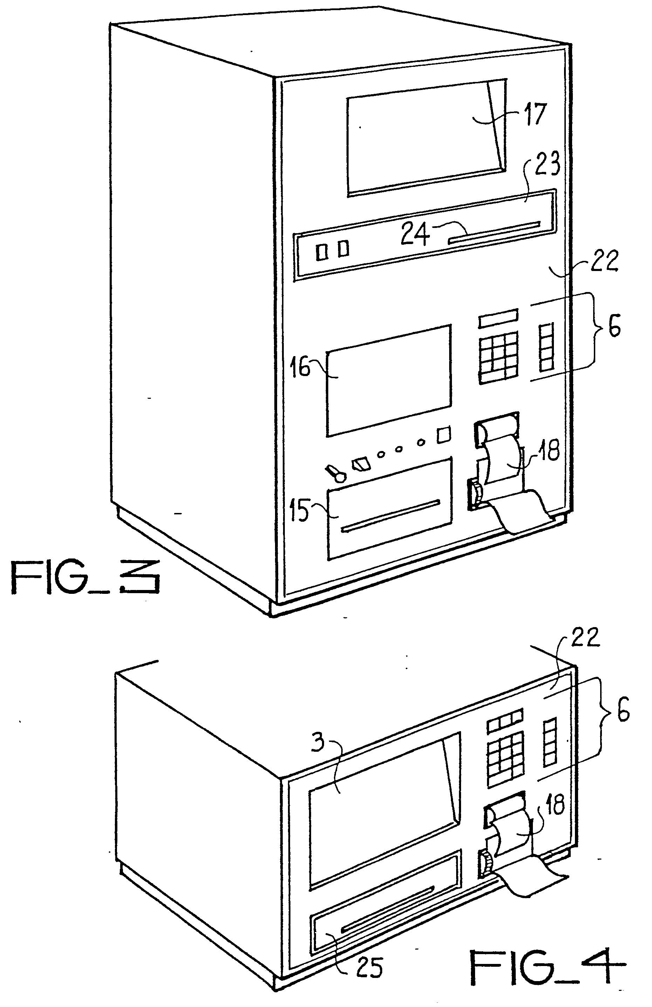

La figure 2 donne une représentation plus détaillée du bloc diagramme du moniteur suivant l'invention.

L'unité logique de commande 1, autour de laquelle est bâti le moniteur, comporte une unité centrale 8 avec une horloge 9 et une mémoire centrale 10 comprenant une mémoire morte 11 pouvant constituer le logiciel et une mémoire vive ou mémoire tampon 12. Des bus d'interconnexion 13 connectent les différents constituants de l'unité logique de commande 1, aux différents moyens essentiels qui ont été énoncés dans la description de la figure 1 et à d'autres moyens auxiliaires, à travers des coupleurs d'adaptation groupés sous la référence 14.

Les moyens 2 dits d'acquisition des données, consistent, dans une première version du moniteur suivant l'invention, en un lecteur de disque souple 15 et les moyens de présentation 3 consistent alors en une console de visualisation et un projecteur de microfiches 17 dont l'utilisation est avantageusement adaptée au fait que le moniteur est capable de se connecter à n'importe quelle baie de mesure et que les interventions de l'opération sont très fréquentes. En 18 on trouve une imprimante dont le rôle sera précisé ultérieurement. Le bus d'interconnexion 13 connecte, comme il a été dit, à l'unité logique de commande 1, des moyens d'interface 4 comprenant par exemple trois interfaces 19, 20 et 21, étant entendu que ce nombre n'est pas limitatif. Par la référence 5 on a désigné les baies d'instrumentation connectées elles-mêmes aux systèmes dont on exécute la maintenance.

Dans une autre version du moniteur, les moyens d'acquisition des données consistent en un vidéodisque sur lequel toutes les données de la procédure sont enregistrées, texte, instructions particulières, schémas, figures. Dans ce cas alors les moyens de présentation sont uniques, constitués par exemple par un tube à rayons cathodiques, éventuellement en couleurs.

Les divers moyens qui ont été décrits à l'appui des figures 1 et 2 et leur articulation vont permettre de décrire dans ce qui suit le fonctionnement du moniteur suivant l'invention.

Le moniteur étant banalisé, c'est à dire étant adaptable à toute sorte de systèmes électroniques, électromécaniques et/ou hydrauliques dont on veut faire la maintenance, c'est à dire aussi bien vérifier les performances que détecter les défauts, les moyens. d'acquisition des données 2 sont constitués par un lecteur de disques souples dans une première version. Sur ce disque est portée ce que l'on appelle la procédure de maintenance sous la forme d'un texte en clair, indiquant entre autres les tâches élémentaires que l'opérateur aura à effectuer pendant le déroulement de la procédure et des instructions codées destinées à la commande des appareils de mesure des baies d'instrumentation connectées au moniteur, ou d'appareils programmables des systèmes objets de la maintenance. La console de visualisation 16 qui dans le premier exemple décrit peut-être un écran à gaz plasma, présente, pas à pas, le texte de la procédure, tel qu'il est enregistré sur le disque souple. La présentation de ce texte devant aider l'opérateur, des instructions codées également enregistrées sur le disque, ne sont en règle générale pas visualisées. Dans le but toujours de l'aide maximale à apporter à l'opérateur pendant le déroulement de la procédure à laquelle il est invité à participer, des schémas par exemple, relatifs aux systèmes testés, peuvent être présentés à l'appui de certaines parties du texte. Ces schémas sont groupés dans l'exemple décrit sur une microfiche dont les différentes vues sont visualisées par un projecteur programmable 17 commandé par des instructions portées sur le disque souple utilisé, qui constitue la mémoire de masse de l'unité logique de commande. Cette visualisation par microfiche permet entre autre à un opérateur peu spécialisé par ailleurs de localiser un organe défectueux ou de trouver un point d'un organe ou apparait un défaut.

Le fonctionnement du moniteur comportant un vidéodisque ne diffère pas sensiblement de celui qui vient d'être exposé. Simplement il n'y a qu'un seul dispositif de présentation, un tube cathodique, au lieu de deux dispositifs.

Ainsi donc, chaque instruction apparaît séquentiellement sur l'écran de visualisation et l'opérateur peut, de ce fait effectuer les mesures qui lui sont demandées sur les appareils de mesure; il peut apprécier si les résultats sont bons ou mauvais et peut alors appeler une nouvelle instruction. L'opérateur pouvant et dans certains cas devant intervenir au cours du déroulement de la procédure, il dispose d'un clavier numérique 6 lui permettant par exemple d'appeler n'importe quelle partie de la procédure qu'il désire consulter. Le clavier comporte, bien entendu, la commande de marche-arrêt du moniteur et celle de son autocontrôle. Il comporte également une commande d'une imprimante 18 prévue pour obtenir automatiquement la référence d'un essai quelconque.

Le moniteur suivant l'invention, adaptable comme cela a été déjà dit à toute sorte d'équipement de test, comporte un certain nombre d'interfaces lui donnant une souplesse d'utilisation assez considérable. Dans une version actuelle, le moniteur peut être équipé d'au moins 5 cartes d'interface de trois types différents, 3 de ces interfaces étant référencées 19, 20, 21 sur la figure 2.

La figure 3 présente une vue schématique du moniteur montrant l'agencement des moyens qu'il comporte, groupés sur la face avant 22 de l'appareil. De haut en bas, on reconnait le projecteur programmable de microfiches 17 donnant des vues explicatives de la procédure de test, un dispositif de contrôle 23 du projecteur de microfiches, avec une fente 24 d'introduction de la microfiche, le pupitre de commande 6, la console de visualisation 16 alphanumérique à plasma qui donne les textes en clair de la procédure de test, l'imprimante 18 qui donne la référence des tests principalement ceux dont les résultats sont incorrects et le lecteur de disque souple 15.

La figure 4 présente une vue schématique semblable à celle de la figure 3, pour la deuxième version du moniteur utilisant un vidéo disque. Sur la face avant 22 du moniteur, n'apparaissent plus que le tube cathodique, de présentation 3 groupant les fonctions de la console de visualisation 16 de la figure 3 et du projecteur de microfiche, le lecteur de vidéo disque 25, le clavier 6 et l'imprimante 18.

On a ainsi décrit un moniteur d'une station de maintenance semi-automatique à visualisation, de systèmes électriques, électromécaniques et/ou hydrauliques.

**Revendications**

1. Moniteur de station de maintenance comportant une unité logique de commande (1) pilotant la procédure de maintenance d'un système électronique, électromécanique et/ou hydraulique à partir de données enregistrées sur un support matériel, comprenant des moyens d'acquisition (2) des données concernant la procédure de maintenance enregistrées sur le support matériel, des moyens de présentation (3) de cette procédure, connectés en sortie de l'unité de commande, des moyens d'intervention (6) d'un opérateur dans le déroulement de la procédure et des moyens d'interface (4) connectant le moniteur avec au moins une baie d'instrumentation, caractérisé en ce que le support introduit dans le dispositif de lecture (15) des moyens d'acquisition est un disque souple dans lequel sont enregistrés en clair le texte d'une procédure de maintenance et sous forme codée des instructions de commande d'une baie d'instrumentation connectée au moniteur et/ou d'appareils programmables d'un système soumis à la maintenance, et que la console de visualisation (16) appartenant aux moyens de présentation (3) affiche en clair des instructions concernant le déroulement pas à pas de la procédure de maintenance et que les moyens de présentation comportent en outre un projecteur programmable (17) de microfiches assurant sous le contrôle des instructions portées sur le disque souple la visualisation de vues et/ou de schémas dont les images sont enregistrées sur un support indépendant du support du texte de la procédure et qui se rapportent aux équipements soumis à la procédure de maintenance.

2. Moniteur de station de maintenance suivant la revendication 1, caractérisé en ce que le projecteur (17) programmable de microfiches et le disque souple fonctionnent de façon synchrone.

3. Moniteur de station de maintenance comportant une unité logique de commande pilotant la procédure de maintenance d'un système électronique, électromécanique et/ou hydraulique à partir de données enregistrées sur un support matériel, comprenant des moyens d'acquisition (2) des données concernant la procédure de maintenance enregistrées sur le support matériel, des moyens de présentation (3) de cette procédure, connectés en sortie de l'unité de commande, des moyens d'intervention (6) d'un opérateur dans le déroulement de la procédure et des moyens d'interface (4) connectant le moniteur avec au moins une baie d'instrumentation, caractérisé en ce que le support introduit dans le dispositif de lecture (15) des moyens d'acquisition est un vidéodisque dans lequel sont enregistrés en clair le texte d'une procédure de maintenance et sous forme codée des instructions de commande d'une baie d'instrumentation connectée au moniteur et/ou d'appareils programmables d'un système soumis à la maintenance, le vidéo-disque portant en plus l'enregistrement des vues ou schémas relatifs aux équipements soumis à la procédure de maintenance, que la console de visualisation (16) appartenant aux moyens de présentation (3) affiche sur un seul dispositif, séquestriellement et en clair d'une part, des instructions concernant le déroulement pas à pas de la procédure de maintenance, d'autre part, lesdites vues et/ou lesdits schémas.

4. Moniteur de station de maintenance suivant la revendication 3, caractérisé en ce que le seul dispositif de la console de visualisation (16) est du type tube à rayon cathodique.

5. Moniteur de station de maintenance suivant la revendication 1 ou 3, caractérisé en ce qu'il comporte en outre une imprimante (18) commandée par l'opérateur à partir du pupitre de commande (6).

6. Utilisation d'un moniteur suivant l'une quelconque des revendications 1 à 5 dans une station de maintenance de système électriques, électromécaniques et/ou hydrauliques.

**Claims**

1. A maintenance station monitor comprising a logic control unit (1) piloting the procedure of maintenance of an electronic, electromechanical and/or hydraulic system on the basis of data recorded on a material support, including means (2) for gathering data related to the maintenance procedure, which are recorded on the material support, means (3) for presenting said procedure, which are connected to the output of the control unit, intervention means (6) for enabling an operator to act on the manner of effecting the procedure, and interface means (4) connecting the monitor to at least one instrument stand, characterized in that the support introduced into the reading device (15) of the gathering means is a flexible disc on which are recorded in clear language the text of a maintenance procedure and in coded language control instructions of an instrument stand connected to the monitor, and/or of programmable apparatus of a system submitted to the maintenance, and in that the visualization column (16) associated to the presenting means (3) displays in clear language instructions related to the successive steps of the maintenance procedure, and in that the presenting means further comprise a programmable projector (17) for projecting microcards under the control of the instructions recorded on the flexible disc, which microcards ensure the visualization of views and/or schematic representations the images of which are recorded on a support independant of the support of said procedure text, which views and schematic representations are related to the equipments submitted to the maintenance procedure.

2. A maintenance station monitor according to claim 1, characterized in that the programmable microcard projector (17) and the flexible disc operate in a synchronous manner.

3. A maintenance station monitor comprising a logic control unit (1) piloting the procedure of maintenance of an electronic, electromechanical and/or hydraulic system on the basis of data recorded on a material support, including means (2) for gathering data related to the maintenance procedure, which are recorded on the material support, means (3) for presenting said procedure, which are connected to the output of the control unit, intervention means (6) for enabling an operator to act on the manner of effecting the procedure, and interface means (4) connecting the monitor to at least one instrument stand, characterized in that the support introduced into the reading device (15) of the gathering means is a video disc on which are recorded in clear language the text of a maintenance procedure and in coded language control instructions of an instrument stand connected to the monitor, and/or of programmable apparatus of a system submitted to the maintenance, the video disc further carrying the record of views or schematic representations related to the equipments submitted to the maintenance procedure, and in that the visualization column (16) associated to the presenting means (3) sequentially displays on a single device, on the one hand, in clear language instructions related to the successive steps of the maintenance procedure, and on the other hand, said views and/or schematic representations.

4. A maintenance station monitor according to claim 3, characterized in that said single device of visualization column (16) is a device of the cathode ray tube type.

5. A maintenance station monitor according to claim 1 or 3, characterized in that it further comprises a printing device (18) controlled by the operator from the control stand (6).

6. The utilisation of a monitor according to any one of claims 1 to 5 in a maintenance station for electric, electromechanical and/or hydraulic systems.

## Patentansprüche

1. Wartungsstandkontrollgerät mit einer den Wartungsvorgang eines elektronischen, elektromechanischen und/oder hydraulischen Systems nach Massgabe der auf einem stofflichen Träger gespeicherten Daten steuernden logischen Steuereinheit (1), mit Aufnahmemitteln (2) zur Aufnahme der auf dem stofflichen Träger gespeicherten, den Wartungsvorgang betreffenden Daten, Mitteln (3) zur Darstellung dieses Vorgangs, die an den Ausgang der Steuereinheit angeschlossen sind, Eingriffmitteln (6) für das Eingreifen einer Bedienungsperson in den Ablauf des Vorgangs, und Grenzflächenmitteln (4), die das Kontrollgerät mit wenigstens einer Instrumentenbucht verbindet, dadurch gekennzeichnet, dass der in das Lesegerät (15) der Aufnahmemittel eingeführte Träger eine flexible Platte ist, auf welcher in Klarschrift der Text eines Wartungsvorganges und in verschlüsselter Form die Steuerbefehle einer mit dem Kontrollgerät verbundenen Instrumentenbucht, und/oder programmierbarer Apparate eines der Wartung unterworfenen Systems gespeichert sind, dass die zu den Darstellungsmitteln (3) gehörige Sichtsäule (16) in Klarschrift Weisungen bezüglich des schrittweisen Ablaufs des Wartungsvorganges anzeigt, und dass die Darstellungsmittel ferner einen programmierbaren Mikrokartenprojecktor (17) aufweisen, der unter der Kontrolle der auf der flexiblen Platte gespeicherten Weisungen die Sichtbarmachung der Ansichten und/oder schematischen Darstellungen bewirkt, deren Bilder auf einem vom Träger des Wartungsvorgangstextes unabhängiger Träger gespeichert sind und sich auf das dem Wartungsvorgang unterworfene Material beziehen.

2. Wartungsstandkontrollgerät nach Anspruch 1, dadurch gekennzeichnet, dass der programmierbare Mikrokartenprojektor (17) und die flexible Platte synchron arbeiten.

3. Wartungsstandkontrollgerät mit einer den Wartungsvorgang eines elektronischen, elektromechanischen und/oder hydraulischen Systems nach Massgabe der auf einem stofflichen Träger gespeicherten Daten steuernden logischen Steuereinheit, mit Aufnahmemitteln (2) zur Aufnahme der auf dem stofflichen Träger gespeicherten, den Wartungsvorgang betreffenden Daten, Mitteln (3) zur Darstellung dieses Vorgangs, die an den Augang der Steuereinheit angeschlossen sind, Eingriffmitteln (6) für das Eingreifen einer Bedienungsperson in den Ablauf des Vorgangs, und Grenzflächenmitteln (4), die das Kontrollgerät mit wenigstens einer Instrumentenbucht verbindet, dadurch gekennzeichnet, dass der in das Lesegerät (15) der Aufnahmemittel eingeführte Träger eine Videoplatte ist, auf welcher in Klarschrift der Text eines Wartungsvorganges und in verschlüsselter Form die Steuerbefehle einer mit dem Kontrollgerät verbundenen Instrumentenbucht, und/oder programmierbarer Apparate eines der Wartung unterworfenen Systems gespeichert sind, wobei die Videoplatte ferner sich auf das zu wartende Material beziehende Ansichten oder schematische Darstellungen trägt, dass die zu den Darstellungsmittel (3) gehörige Sichtsäule (16) an einer einzigen Vorrichtung sequeltiell einerseits in Klarschrift Weisungen bezüglich des schrittweisen Ablaufs des Wartungsvorganges und andererseits die Ansichten und/oder schematischen Darstellungen anzeigt.

4. Wartungsstandkontrollgerät nach Anspruch (3), dadurch gekennzeichnet, dass die gennante einzige Vorrichtung der Sichtsäule (16) eine Vorrichtung vom Kathodenstrahlröhrentyps ist.

5. Wartungsstandkontrollgerät nach Anspruch, 1 oder 3, dadurch gekennzeichnet, dass es ferner eine durch die Bedienungsperson von einem Steuerpult (6) aus bediente Druckvorrichtung (18) umfasst.

6. Anwendung eines Kontrollgeräts nach einem der Ansprüche 1 bis 5 bei einem Wartungsstand zur Wartung elektrischer, elektromechanischer und/oder hydraulischer Systeme.

# FIG_1

# FIG_2

0 021 888

FIG_3

FIG_4